# EUROPEAN PATENT APPLICATION

(11) **EP 4 390 902 A1**
(43) Date of publication of application: **26.06.2024**
(21) Application number: 21950861.1
(22) Date of filing: 21.07.2021
(51) Int. Cl.: G09G 3/02, G09F 9/33, G09F 11/00

(54) **IMAGE GENERATING DEVICE**

(71) Applicant: Chykeyuk, Kiryl, London Greater London SE1 3ER (GB)
(72) Inventor: ZHURAVLIOV, Alexandr, London Greater London SE1 3ER (GB); MALINOUSKI, Dzmitry, London Greater London SE1 3ER (GB)
(74) Representative: Kromanis, Artis
(86) International application number: PCT/EA2021/050005
(87) International publication number: WO 2023/001349

(57) **Abstract**

The technical solution relates to a design for devices for displaying images and for allowing same to be mounted on different surfaces. The technical result of the claimed invention consists in improving the reliability of the device as a result of a communication channel (optical communication channel) being arranged in a special protruding part of a stator, which allows the communication channel (optical communication channel) to be connected to a source of image data without kinks, twists or the formation of loops in the communication channel (optical communication channel), and also providing for universal fastening of the device to different surfaces, more precise connection of the device to data sources and more precise installation of several devices in proximity to one another to form an image "wall" by preventing gaps and dead zones in the image.

## Description

The technical solution relates to the design of image display devices and their installation on various surfaces.

### BACKGROUND OF THE INVENTION

3D holographic devices with F2-70H LED bars from HoloFly are known in the prior art (https://holofly.ru/holofly-f2-70h/). The devices include a rotor with LED bars (blades) and a cylindrical part that is connected to a cylindrical stator. In this case, the information outputs-inputs (outputs-inputs of communication channels) of the device are positioned on the end surface of the stator.

The disadvantage of such a device is that it is possible to connect the outputs of the device with the power grid and the image data source only before placing it on a flat surface (wall).

In the prior art, a modular display is disclosed in the international application No. WO2010013046A3 (publication date: 04.02.2010, G09F9 / 33). The device comprises a stator that is housing an optical transmitter and an optical receiver that cooperate in order to transmit image data from an image data source to a controller via an optical communication channel. The drawback of this device lies in the complexity of linking devices to the image data source and establishing connections with adjacent devices. The data outputs are positioned on a different planes of the device, which makes it complicated to install the device on a different surfaces and connect to the image data source.

Also, the disadvantage of this device is the lack of an external optical output, which provides more accurate and faster data transfer to the device.

In the prior art, a device according to patent document US20090002270 (publication date: 01.01.2009, G09G3/005) is known. According to the patent document, a composite display that receives data through an optical fiber is known. Moreover, the input of the optical fiber is located at the end of the stator. In this case, the device is attached to the platform via clamps in order to prevent bending and fraction of the optical cable at the output of the stator.

The disadvantage is the complexity of the design of the device, while the design is made in such a way that the outputs are difficult to access, in particular the optical output. The device lacks versatility and can only be positioned in a certain way on a special holder.

The technical result of the claimed invention is increased reliability of the device due to arrangement of the communication channel (optical communication channel) in a protruding part of the stator, that connects the communication channel (optical communication channel) to the image data source without bending, twisting and looping of the communication channel (optical communication channel), while offering the versatility of mounting the device on various surfaces (walls, shields, etc.), therefore the accuracy of the connection of the device to the data sources, even when the device being placed on flat surfaces, is increased, and the accuracy of installing multiple devices side by side, forming image "walls" is increased as well, by preventing gaps and blind spots in the image.

The claimed invention allows to achieve, among other beneficial effects, an unexpected technical result. The initial technical challenge aimed at enhancing the device's reliability, improving the quality of the reproduced image, and extending its capability to operate over long distances from the data source through the use of an optical communication channel. This led to an enhancement of the device's stator by incorporating a specialized protruding part on its side surface, positioned at an angle relative to the rotor's side surface. Consequently, this addresses and overcomes issues such as bending, twisting, and looping of the communication channel (optical communication channel) at the device's input. Additionally, the curved section of the stator addresses the shortcomings present in prior art, such as restricted installation possibilities on diverse surfaces and inadequate positioning accuracy of devices concerning each other in order to eliminate gaps and blind zones in the reproduced image while maintaining operational reliability. Thus, the claimed technical result is achieved through a positive synergistic effect resulting from the unique features of the invention.

The technical result is achieved due to the fact that the image generating device includes a rotor, with LED bars positioned on its one end, the rotor with its opposite end is connected to the stator, the stator comprises the protruding part on its side surface, wherein the stator comprises a rotor control unit, which is configured to transmit data to the rotor, and the optical communication channel connected to the rotor control unit and located in the protruding part of the stator, wherein the output of the optical communication channel is located at the end of the protruding part of the stator.

The technical result is achieved due to the fact that the image generating device includes the rotor with LED bars positioned on its one end, the rotor with its opposite end is connected to the stator, the stator comprises the protruding part on its side surface, wherein the stator comprises the rotor control unit, which configured to wirelessly transmit data to the rotor, and a communication channel connected to the rotor control unit and that is located in the protruding part of the stator, wherein the output of the communication channel is located at the end of the protruding part of the stator.

The current invention eliminates the issue of cables looping and twisting during the laying of wires from the communication channel's output to the connection with the data source (image supply source). Also, when multiple devices are mounted side by side, the effect of image overlapping is achieved therefore excluding the formation of gaps and blind spots in the image. Moreover, optimal side-by-side arrangement of multiple devices is ensured due to versatility of the device, which is achieved by presence of the protruding part of the stator in which the communication channel is arranged, wherein at the end of the protruding part of the stator the output of the communication channel is located. All the above mentioned in conjunction ensure the convenient fastening of the device on various surfaces and the possibility of connection even after installation on flat surfaces due to the combination of the features of the device. An embodiment of the image generating device, in which the optical communication channel (communication channel) is configured to connect the device to a data source, is present.

In other embodiments of the image generating device, in which at the end of the protruding part of the stator, next to the optical communication channel (communication channel), an input for connection to a power source, which is connected to the rotor control unit, is present.

An embodiment of the image generating device, in which the rotor control unit is configured to wirelessly transmit data to the rotor, is present.

An embodiment of the image generating device, in which the protruding part of the stator is perpendicular to the side surface of the stator (the side surface of the main part of the stator connected to the rotor), is present.

An embodiment of the image generating device, in which the stator protrusion is configured to change the angle between the stator side surface and the stator protrusion.

An embodiment of the image generating device, in which the protruding part of the stator is rotatable, for example, around its own axis, in present.

An embodiment of the image generating device, wherein the stator comprises the LED indicator, is present.

An embodiment of the image generating device in which the stator includes a light sensor is present.

An embodiment of the image generating device in which the stator comprises an IR receiver, is present.

The protruding part of the stator, preferably, comprises holes, grooves for mounting the device on the wall or in a profile, wherein connectors for connecting power and data sources are located on the protruding part, therefore providing convenient access to the necessary outputs when mounting the device on the wall (profile). When multiple devices are installed side by side, the accuracy of their positioning relative to each other is ensured. Therefore, the image wall (a system of multiple devices) is quickly and easily obtained with optimal overlap of the LED bars (blades) of devices located next to each other.

The rotor to a greater extent can be obtained in the form of a cylinder.

The side surface of the stator is the side surface of the part of the stator, located along the axis of rotation of the rotor.

The stator and its protruding part may not be structurally interconnected, meaning the stator can only be visually segmented at the point where the stator housing changes its direction (at its bend). In this case, the stator is obtained in the form of a single structural element (single housing) that contains the bend (angle).

The stator and its protruding part may be structurally detached from one another. A rotary element can be introduced between the stator components, enabling the alteration of the angle between them and/or facilitating independent rotation.

Thus, a part of the stator is considered both a structurally distinct component and an integrated element, which can only be visually separated at the bend (angle) of the stator. The rotary element allows for the adjustment of the angle between the stator and its protruding part, facilitating the rotation of the stator in respect to the rotor and/or the protruding part of the stator.

A spherical element can be used as the rotary element.

A possibility of rotation of the protrusion of the stator, a change of angle between the stator and its protrusion further increases the versatility of the device and facilitates the connection of the communication channel output (optical link output) and the image data source.

The protruding part of the stator might have any shape, for example, cylindrical, trapezoidal, cubic, the form of a parallelepiped. The protruding part of the stator might have any irregular shape, for example, elongated, parallelepiped-like or oval, wherein the possibility of mounting the device and connecting it to the data source must be ensured.

The stator may contain various steps, notches, protrusions, cutouts, etc.

### DETAILED DESCRIPTION

The design of the claimed device is illustrated by the following figures.
Fig. 1 - a general view (3/4) of the device.

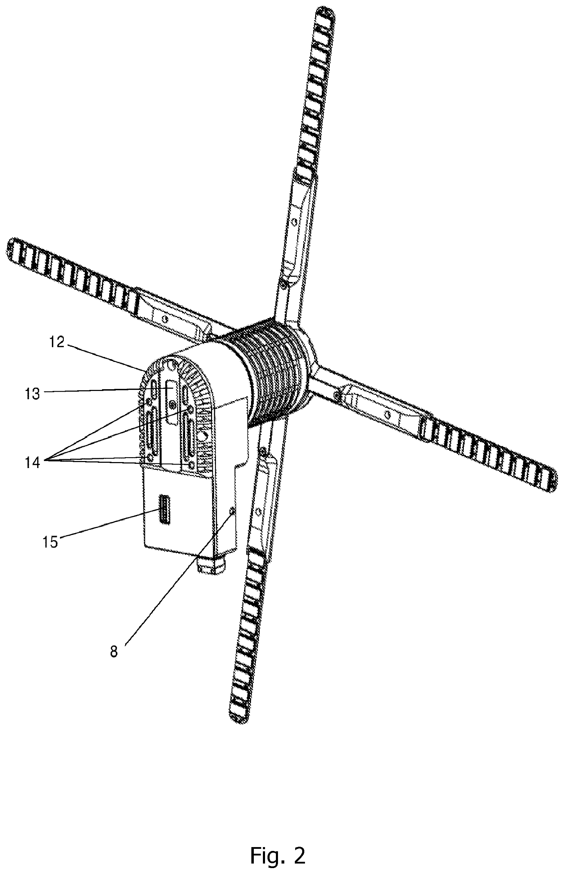

Fig. 2- a rear view (3/4) of the device.
Fig. 3- a view of the device being attached to a vertical surface (to the wall).
Fig. 4 - a view of the knocked-down device with a wall mounting.
Fig. 5 - a view of the device being attached to the end part of the shaped pipe.
Fig.6 - a view of the device positioned at the end of the shaped pipe, with a knocked-down fastening.
Fig.7- a general view of the device positioned at the end of a curved shaped pipe attached to a vertical surface (wall).
Fig. 8 - a side view of the device at the end of a curved shaped pipe attached to a vertical surface (wall).
Fig. 9 - a general view of the device installed in a decorative cap in the form of a hexagon.
Fig. 10 - a rear view (3/4) of the device installed in a decorative cap in the form of a hexagon.
Fig. 11 - a view of a device attached to a pipe with a wall mounting.
Fig. 12 - a general view of the device mounted on the top of a flat surface (support shield).
Fig. 13 - a rear view (3/4) of the device mounted on the top of a flat surface (support shield).
Fig. 14- a front view of the device attached to a support shield.
Fig. 15 - a rear view of the device attached to a support shield.

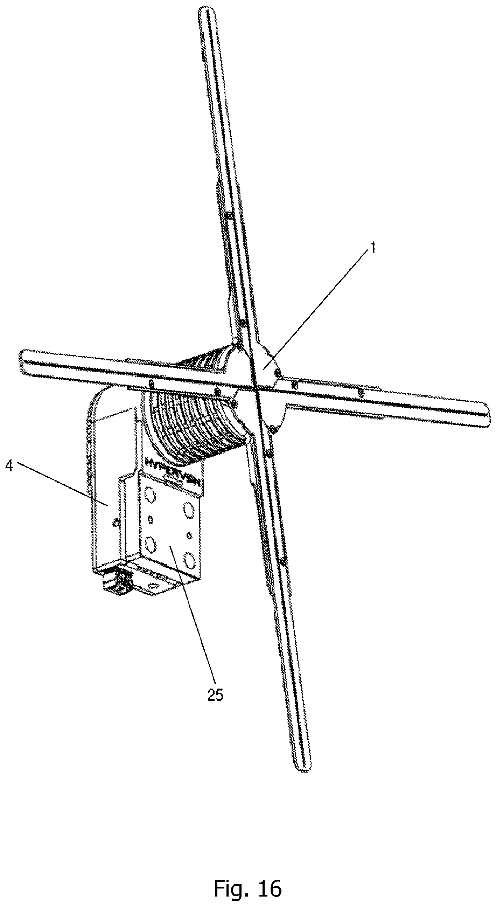

Fig. 16- a view of the device with an overlap attached to the stator (lower part of the stator).

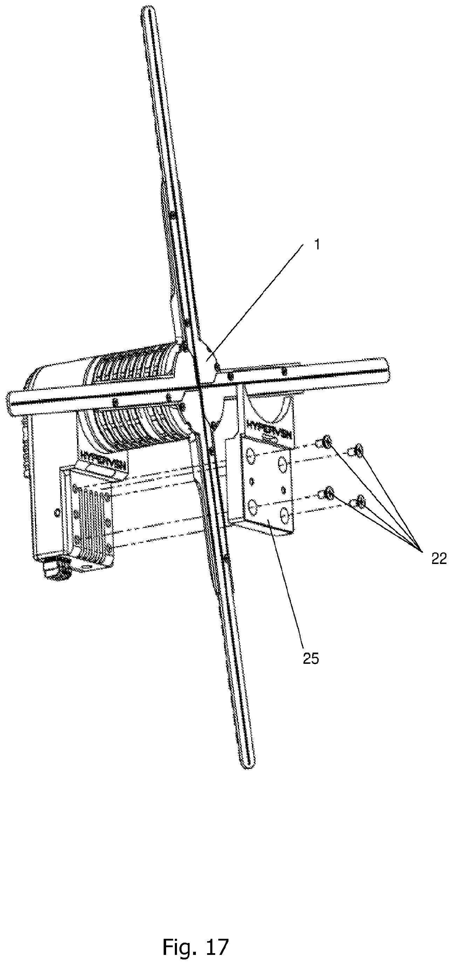

Fig. 17 - a view of the knocked-down device with the overlap.
Fig. 18 - a front view of three devices mounted on a shaped pipe (on a rectangular profile), with the second device attached via the overlap.
Fig. 19 - a rear view of three devices mounted on a shaped pipe (on a rectangular profile), with the second device attached via the overlap.
Fig. 20 - a side view of three devices installed in a shaped pipe (on a rectangular profile).
Fig. 21- a view of two devices installed in a support shield, with the second device located through the overlap.
Fig. 22 - an example of the positioning of the rotor control unit and the communication channel (optical communication channel) inside the stator and its protruding part.

### List of references:

I - rotor;
2 - stator;
3 - cylindrical part of the rotor;
4 - protruding part of the stator;
5 - LED bars (blades);
6 - a space for logo, for example HYPERVSN;
7 - window for indicator LED / light sensor / IR receiver;
8 - side mounting holes on the protruding part of the stator;
9 - output (input) of the optical communication channel (communication channel);
10 - front ribs on the protruding part of the stator;
11 - threaded mounting holes on the front side of the protruding part of the stator;
12 - rear stator ribs;
13 - a place for connecting the expansion board with actuators and sensors;
14 - threaded mounting holes on the back of the stator;
15 - stator housing opening indicator;
16 - support shield;
17 - wall mounting (mounting device);
18 - side mounting screws;
19 - mounting holes in the wall (shield);
20 - shaped pipe;
21 - decorative cap;
22 - fixing screws;
24 - round pipe;
25 - overlap of the stator;
26 - cutouts in the support shield;
27 - rotor control unit;
28 - input (output) for powering the device.

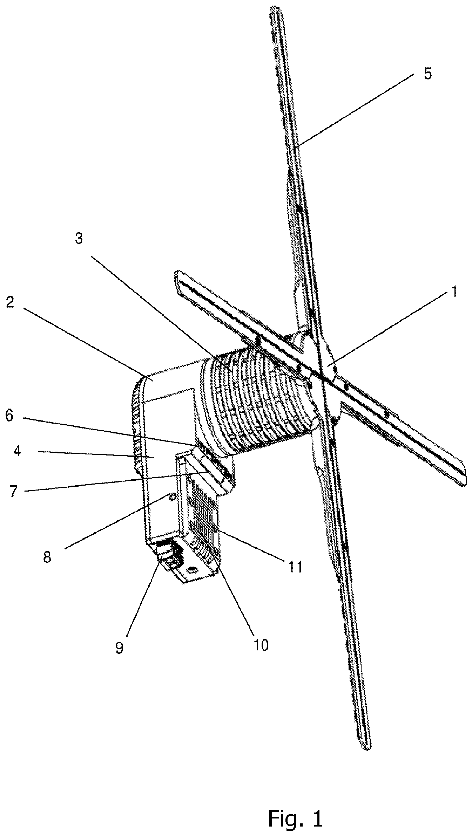

The image generating device (Fig. 1) comprises a rotor 1, at one end of which there are positioned LED bars 5, the rotor 1 with its opposite end is connected to a stator 2, the stator 2 comprises a protruding part 4 on its side surface, wherein the stator 2 comprises a rotor control unit 27, which is configured to transmit data to the rotor 1, and an optical communication channel connected to the rotor control unit 27 and which is located in the protruding part 4 of the stator 2, wherein the output of the optical communication channel 9 is located at the end of the protruding part of the stator.

The optical communication channel 9 is configured to connect the device to a data source (DATA).

Adjacent to the optical communication channel, an input (output) 28 is located for connecting to a power source (POWER), which is connected to the rotor control unit 27.

The dimensions of the stator 2 in three lateral directions do not exceed the dimension of the cylindrical part 3 of the rotor 1, wherein the fourth direction is defined by the protruding part 4, which ensures the functionality of the device in relation to its mounting on various surfaces and at the same time provides connections to the power source and data.

Additionally, the rotor 1 comprises a cross, which supports (holds) the LED bars 5 of the rotor 1 on its cylindrical part 3. The cross is attached to the end side of the cylindrical part 3 of the rotor 1 and provides additional rigidity for a reliable fastening of the LED bars 5. The cross ensures the possibility to obtain larger image of a greater quality due to a more accurate installation of the LED bars 5 relative to the axis of the cylindrical part 3 of the rotor 1.

On the side parts of the protruding part 4 of the stator 2 side mounting holes 11 with a thread are obtained, for example, one on each side.

On the front side of the protruding part 4 of the stator 2, ribs (recesses, grooves) 10 are obtained to improve the heat exchange of the stator with the environment. Ribs (recesses, grooves) are also provided on the cylindrical part 3 of the rotor 1 to improve heat transfer. Also, to improve heat transfer rear ribs are obtained on the protruding part 4 of the stator 2.

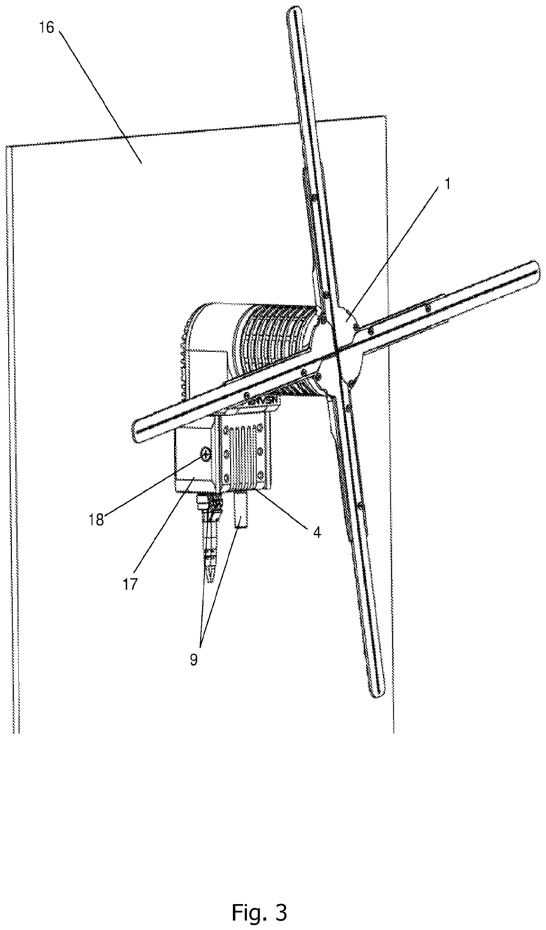

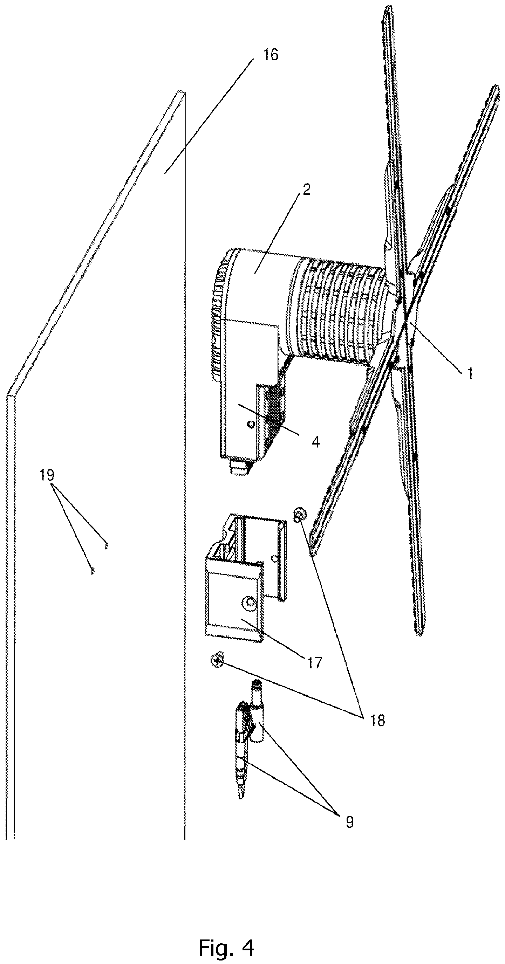

The device can be mounted on the support shield 16 (Fig. 3, 4), for example, using a wall mounting 17. The mounting 17 is fixed on the protruding part 4 of the stator 2 using, for example, side mounting screws 18. In this case, the wall mounting with the device is installed on a vertical surface (support shield 16).

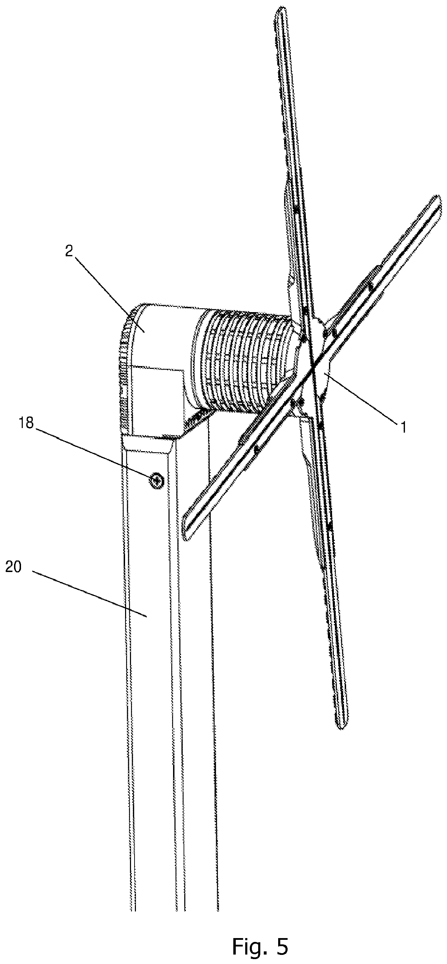

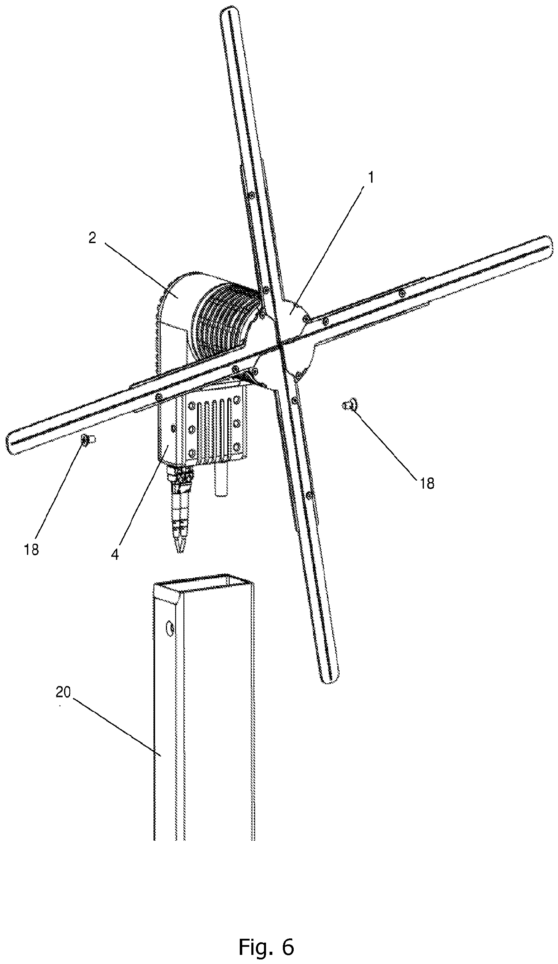

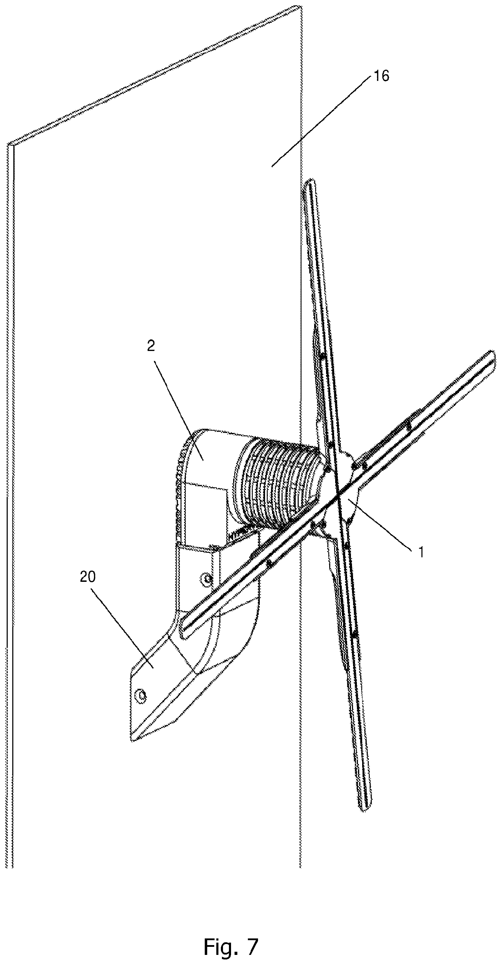

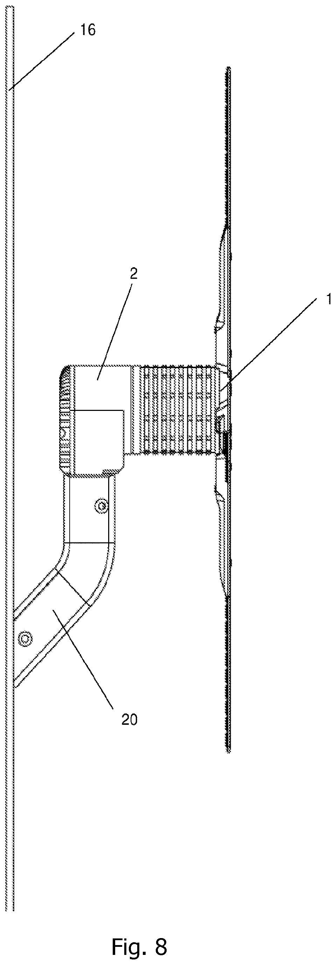

The device can be installed in a hollow shaped pipe 20 with the protruding part 4 of the stator 2 and additionally fixed with the side mounting screws 18 (Fig. 5-8). Inside the profile 20 wires (cables) are laid, therefore providing additional protection from external damage. The device is lowered with the protruding part 4 of the stator 2 until it is secured in the profile 20 and then fixed with the mounting screws 18. As a result, looping and twisting of the cable is prevented when laying wires from the stator 2 of the device to the connection of the power supply and data (imaging source).

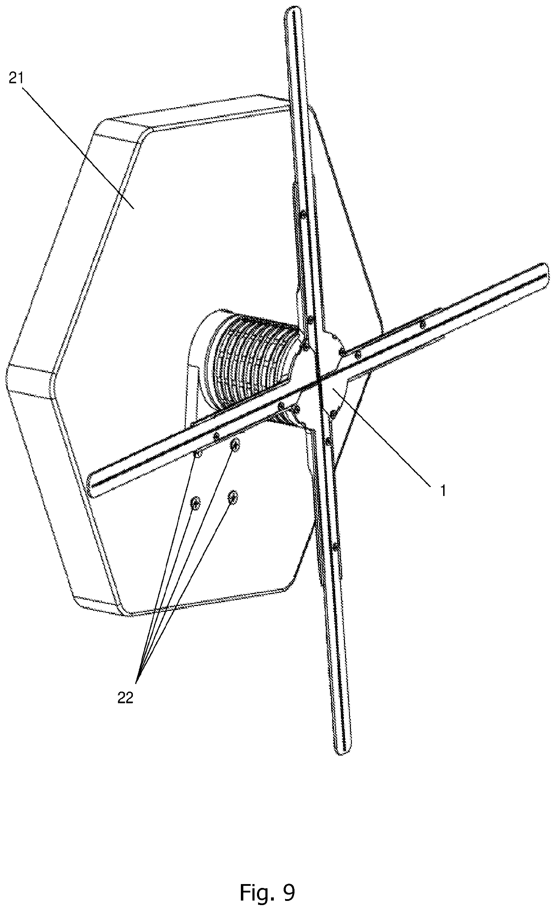

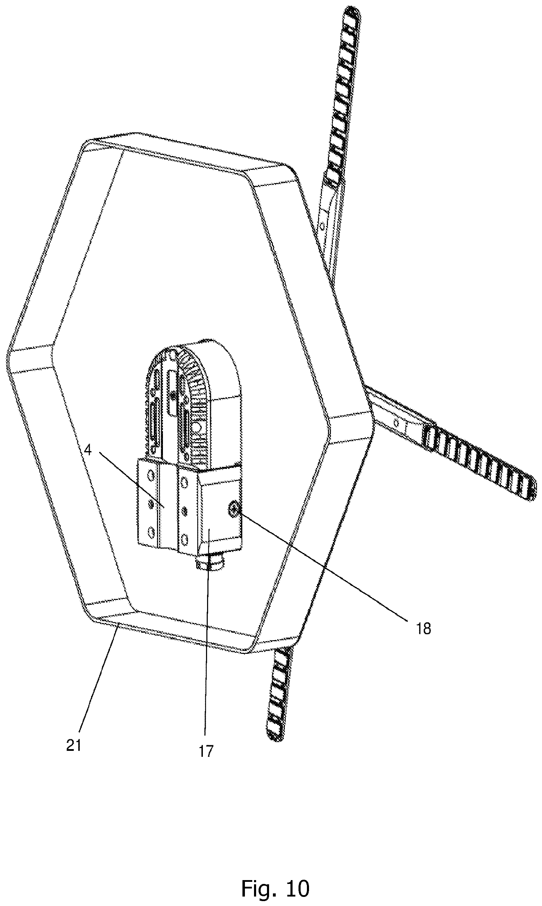

The device can be installed in a decorative cap 21 (Fig. 9, 10), for example, using the device for attachment 17 and the fixing screws 18 which are placed on the protruding part 4 of the stator 2.

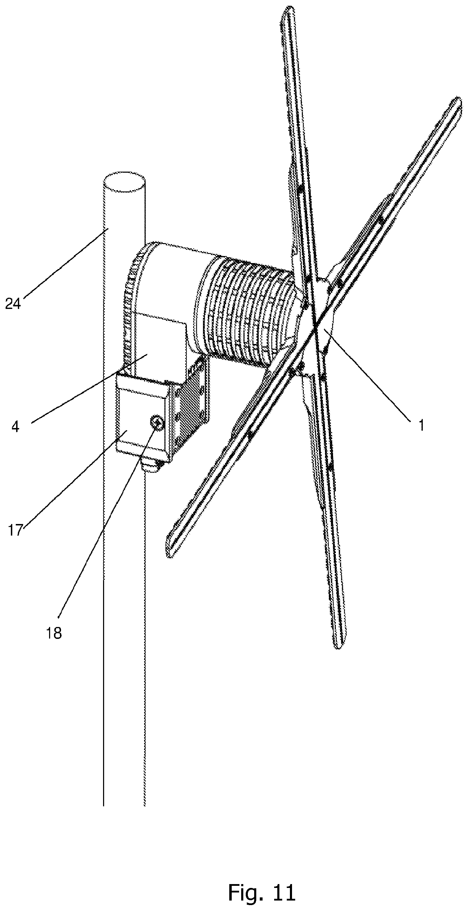

With the help of the protruding part 4 of the stator 2, the image generating device can be mounted on a circular pipe 24 (Fig. 11).

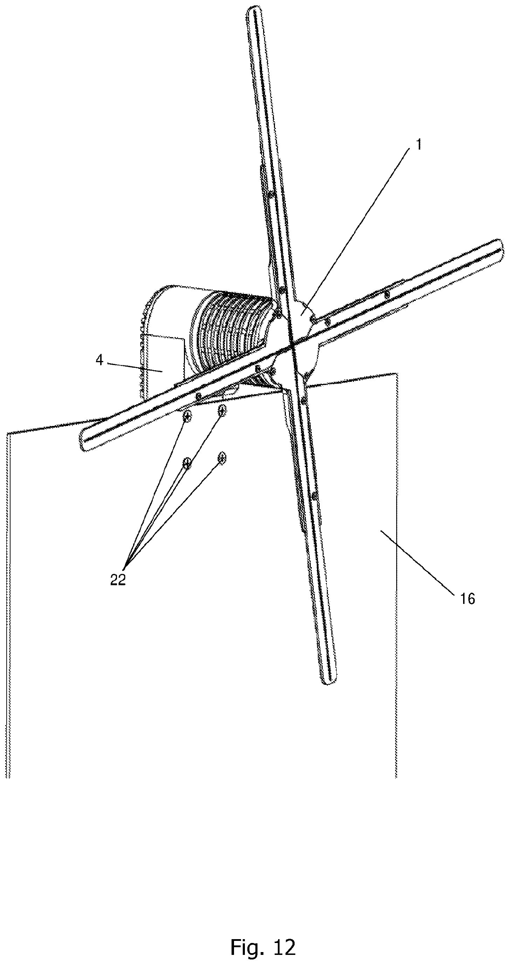

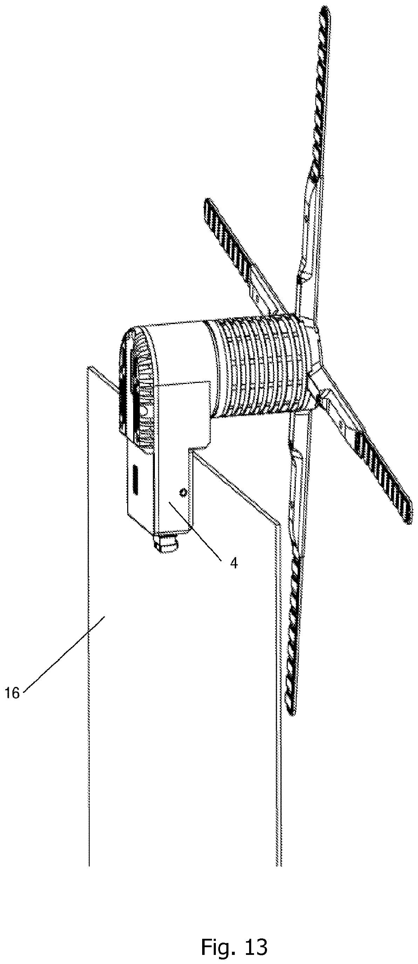

Four or six mounting holes can be provided on the front side of the protruding part 4 of the stator 2, the holes and the mounting screws 22 allow installation of the device on the edge of the support shield 16 (Fig. 12, 13).

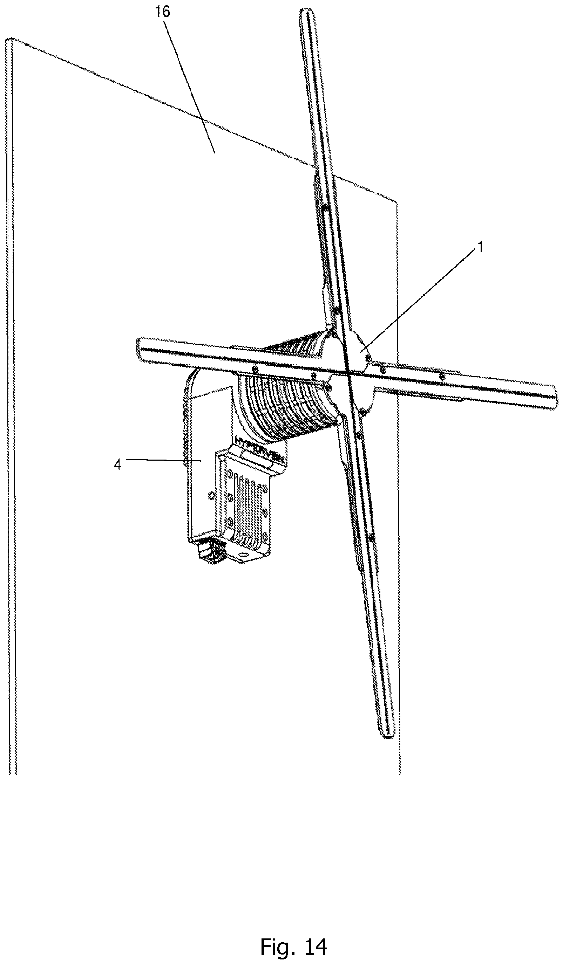

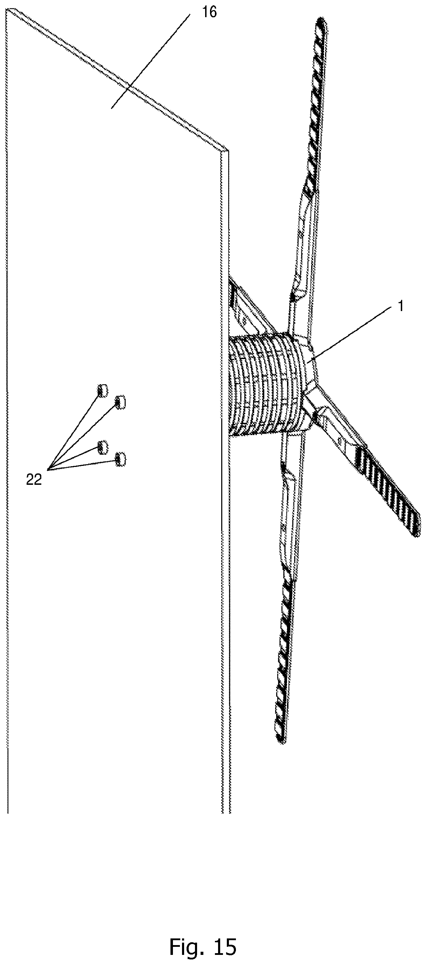

Additionally, on the back side of the protruding part 4 of the stator 2, holes are provided, therefore allowing the device to be hung, for example, on the support shield 16 (Fig. 14, 15).

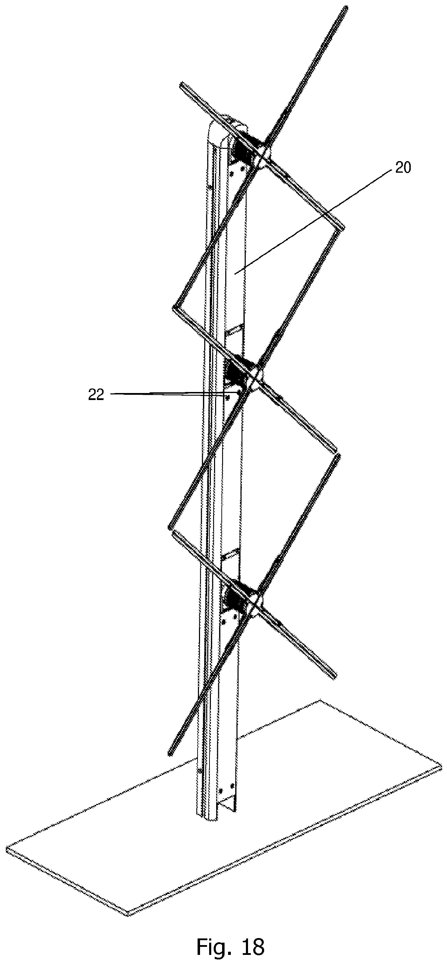

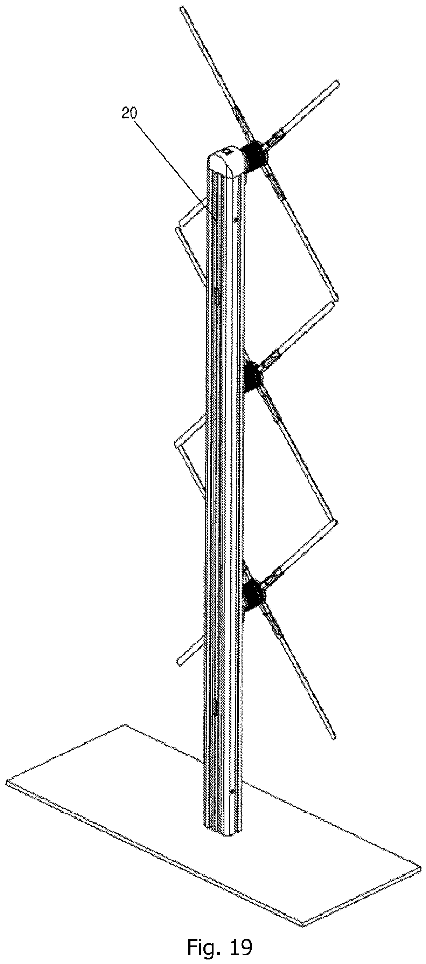

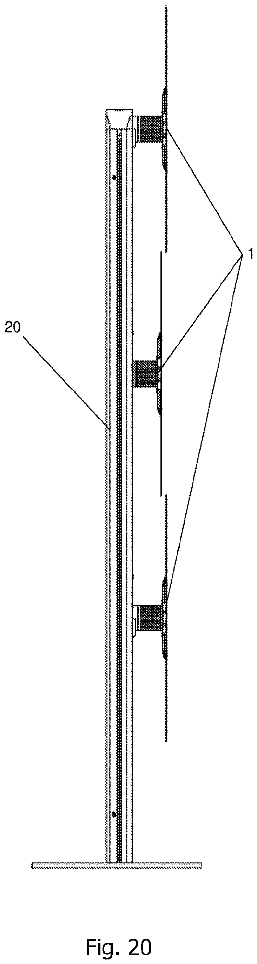

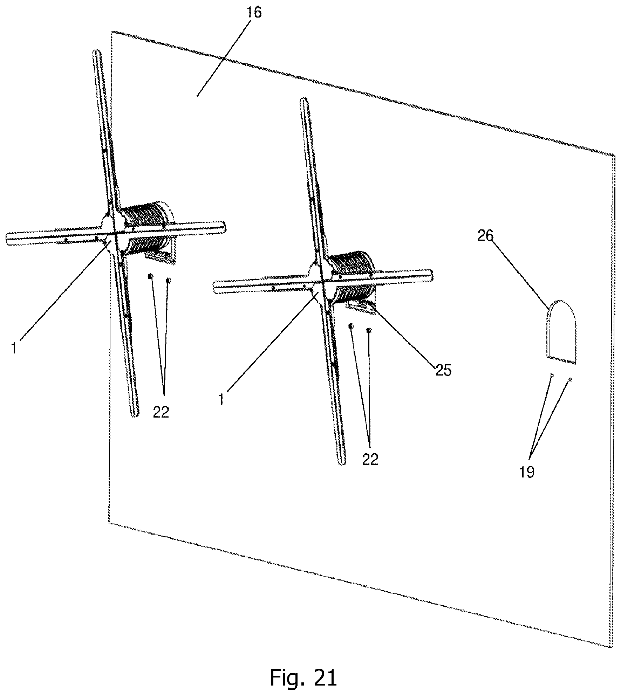

It is possible to mount multiple devices on the shaped pipe 20 (Fig. 18). At the same time, the overlap 25 provided on the stator 2, allows to provide a gap between the LED bars 5 of the rotors 1 of the neighboring devices. As a result, multiple devices create an effect of image overlapping (Figs. 18-21), therefore eliminating the formation of gaps and blind spots in the image.

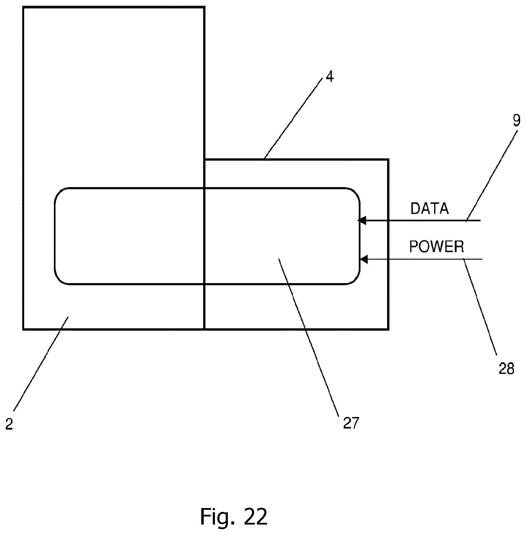

In Fig. 22 illustrates that the device positioned in the middle is installed with the overlap 25, therefore the LED bars 5 of the rotor 1 are at a closer distance to the profile 16 than the other two neighboring devices.

As a result of the claimed construction of the device, the diverse options for installing the image generating device are provided due to the presence of a special protruding (multifunctional) part of the stator, while convenient connection of the device is ensured due to the presence of an optical communication channel (communication channel) connected to the rotor control unit and located in the protruding part of the stator, wherein the output of the optical communication channel (communication channel) is located at the end of the protruding part of the stator.

## Claims

1. An image generating device comprising a rotor, at one end of which there are positioned light emitting diode (LED) bars,
the rotor is connected to a stator by its opposite end,
the stator is made with a part protruding on its side surface,
wherein the stator comprises a rotor control unit, which is configured to transmit data to the rotor, and an optical communication channel connected to the rotor control unit and located in the protruding part of the stator,
wherein the output of the optical communication channel is located at the end of the protruding part of the stator.

2. The image generating device according to claim 1, wherein the optical communication channel is configured to connect the device to a power source and to a data source.

3. The image generating device according to claim 1, wherein at the end of the protruding part of the stator, adjacent to the optical communication channel, an input for connecting to a power source is located, which is connected to the rotor control unit.

4. An image generating device, comprising a rotor, at one end of which there are positioned light emitting diode (LED) bars,
the rotor is connected to a stator by its opposite end,
the stator is made with a part protruding on its side surface,
wherein the stator comprises a rotor control unit, which is configured to wirelessly transmit data to the rotor, and a communication channel connected to the rotor control unit and located in the protruding part of the stator,
wherein the output of the communication channel is located at the end of the protruding part of the stator.

5. The image generating device according to claim 4, wherein the communication channel is configured to connect the device to a power source and to a data source.

6. The image generating device according to claim 4, wherein at the end of the protruding part of the stator, adjacent to the communication channel, an input for connecting to a power source is located, which is connected to the rotor control unit.

7. The image generating device according to any one of claims 1 and 4, wherein the protruding part of the stator is perpendicular in relation to the side surface of the stator.

8. The image generating device according to any one of claims 1 and 4, wherein the protruding part of the stator is configured to change the angle between the stator protrusion and its side surface.

9. The image generating device according to any one of claims 1 and 4, wherein the protruding part of the stator is rotatable, for example, around its axis.

10. The image generating device according to any one of claims 1 and 4, wherein the stator comprises an indicator light emitting diode (LED).

11. The image generating device according to any one of claims 1 and 4, wherein the stator comprises a light sensor.

12. The image generating device according to any one of claims 1 and 4, wherein the stator comprises an IR receiver.
